(19) Europäisches Patentamt
European Patent Office
Office européen des brevets

(11) **EP 4 521 247 A1**

(12) **EUROPEAN PATENT APPLICATION**
published in accordance with Art. 153(4) EPC

(43) Date of publication:
**12.03.2025 Bulletin 2025/11**

(21) Application number: **22944245.4**

(22) Date of filing: **31.05.2022**

(51) International Patent Classification (IPC):
*G06F 9/50* (2006.01)

(52) Cooperative Patent Classification (CPC):
**G06F 9/50**

(86) International application number:
**PCT/CN2022/096455**

(87) International publication number:
**WO 2023/230909 (07.12.2023 Gazette 2023/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventor: **ZHU, Xiangyi
Shenzhen, Guangdong 518129 (CN)**

(74) Representative: **Körber, Martin Hans et al
Mitscherlich PartmbB
Patent- und Rechtsanwälte
Karlstraße 7
80333 München (DE)**

(54) **SCHEDULING METHOD AND RELATED EQUIPMENT**

(57) Embodiments of this application provide a scheduling method and a related apparatus. A virtual machine system includes a host. The host creates a plurality of virtual machines based on obtained virtual machine configuration information. The plurality of virtual machines share computing power of a processor. The processor allocates a time slice to each virtual machine in the plurality of virtual machines based on first configuration information received from the host. The first configuration information indicates a computing power ratio of each virtual machine in the plurality of virtual machines. A virtual machine with a larger computing power ratio is allocated with more time slices. Therefore, a computing power requirement of each virtual machine can be satisfied, and rationality of time slice allocation to each virtual machine can be ensured. Embodiments provided in this application can be applied to an intelligent computing device such as an intelligent vehicle or a new energy vehicle.

```
        Host                          Processor

S201: Obtain virtual machine configuration
information, where the virtual machine
configuration information indicates to
create a plurality of virtual machines

S202: Create the plurality of virtual
machines based on the virtual machine
configuration information

        S203: First configuration information

                    S204: Allocate a time slice to each virtual machine
                    based on the first configuration information, where the
                    first configuration information indicates a computing
                    power ratio of each virtual machine in the plurality of
                    virtual machines

                    S205: When a time slice is present in a first virtual
                    machine in the plurality of virtual machines, and a
                    second task arrives while a first task is being executed,
                    stop execution of the first task, and schedule execution
                    of the second task, where a priority of an execution
                    sequence to which the second task belongs is higher
                    than a priority of an execution sequence to which the
                    first task belongs
```

FIG. 2

EP 4 521 247 A1

## Description

### TECHNICAL FIELD

This application relates to the field of information technologies, and in particular, to a scheduling method and a related apparatus.

### BACKGROUND

Artificial intelligence (artificial intelligence, AI) is a theory, a method, a technology, and an application system that simulates, extends, and expands human intelligence by using a digital computer or a machine controlled by a digital computer, to perceive an environment, obtain knowledge, and obtain a determining result by using the knowledge. In other words, artificial intelligence is a branch of computer science and attempts to understand essence of intelligence and produce a new intelligent machine that can react in a manner similar to human intelligence. Artificial intelligence is to research design principles and implementation methods of various intelligent machines, so that the machines have perception, inference, and decision-making functions. Research in the field of artificial intelligence includes robotics, natural language processing, computer vision, decision-making and inference, human-machine interaction, recommendation and search, AI basic theories, and the like.

However, computing resources of intelligent vehicles or other intelligent terminals are limited. This brings challenges to implementation and application of artificial intelligence.

### SUMMARY

This application provides a scheduling method and a related apparatus, to satisfy a computing power requirement of each virtual machine, and ensure rationality of time slice allocation to each virtual machine.

According to a first aspect, this application provides a scheduling method, applied to a virtual machine system. The virtual machine system includes a plurality of virtual machines, and the plurality of virtual machines share computing power of a processor. The method includes: The processor allocates a time slice to each virtual machine in the plurality of virtual machines based on first configuration information, where the first configuration information indicates a computing power ratio of each virtual machine in the plurality of virtual machines; and when a time slice is present in a first virtual machine in the plurality of virtual machines, and a second task arrives while a first task is being executed, the processor stops execution of the first task, and schedules execution of the second task, where a priority of an execution sequence to which the second task belongs is higher than a priority of an execution sequence to which the first task belongs.

In this method, the processor allocates the time slice to each virtual machine in the virtual machine system based on the computing power ratio of each virtual machine in the plurality of virtual machines, and a virtual machine with a larger computing power ratio is allocated with more time slices, so that the plurality of virtual machines share the computing power of the processor, and a computing power requirement of each virtual machine is satisfied. In addition, when a task with a high priority arrives, the task with the high priority is preferentially executed. This can ensure real-time performance of execution of the task with the high priority.

In a possible implementation, the first virtual machine in the plurality of virtual machines includes n execution sequences, and n is an integer greater than or equal to 0. The method further includes: The processor allocates time slices to s execution sequences in the n execution sequences based on the first configuration information and second configuration information, where the second configuration information indicates priorities of the n execution sequences in the first virtual machine, and s is an integer less than or equal to n.

In this implementation, the first virtual machine is any virtual machine in the plurality of virtual machines in the virtual machine system, the first virtual machine includes the n execution sequences, and the processor allocates the time slices to the s execution sequences in the n execution sequences based on the priorities of the n execution sequences in the first virtual machine. An execution sequence with a higher priority in the s execution sequences is allocated with more time slices, so that two-level time slice allocation is implemented, and the computing power requirement of each execution sequence in the first virtual machine is satisfied, and rationality of time slice allocation to each execution sequence is ensured.

In a possible implementation, a priority of the execution sequence in the first virtual machine includes an ordinary-type priority and a real-time-type priority, and the real-time-type priority is higher than the ordinary-type priority; and priorities of the s execution sequences are ordinary-type priorities.

In this implementation, the priority of the execution sequence in the first virtual machine includes the ordinary-type priority and the real-time-type priority. The processor allocates, based on the priorities of the n execution sequences in the first virtual machine, a time slice only to an execution sequence whose priority is the ordinary-type priority in the n execution sequences, and an execution sequence whose priority is a real-time-type priority is scheduled according to an actual requirement. Provided that a time slice is present in the first virtual machine, the execution sequence whose priority is a real-time-type priority can be scheduled. This ensures real-time performance of a real-time service.

In a possible implementation, the method further includes: The processor allocates the time slice to each virtual machine based on the first configuration information and third configuration information, where the third configuration information indicates a cycle length of allocating, by the processor, time slices to the plurality of virtual machines.

In this implementation, the processor allocates the time slices to the plurality of virtual machines in the virtual machine system based on a cycle indicated by the third configuration information. This satisfies the computing power requirement of each virtual machine, and ensures that each service in the virtual machine can be completed on time as required.

In a possible implementation, the cycle length of allocating, by the processor, the time slices to the plurality of virtual machines is greater than or equal to a cycle length of an execution cycle of an execution sequence whose priority is a real-time-type priority.

In this implementation, the cycle length of allocating, by the processor, the time slices to the plurality of virtual machines in the virtual machine system is greater than or equal to the cycle length of the execution cycle of the execution sequence whose priority is the real-time-type priority, so that when a real-time task in the virtual machine is completed, time slices are reallocated to the plurality of virtual machines. This ensures real-time performance of the real-time task.

In a possible implementation, the method further includes: The processor receives the first configuration information.

In a possible implementation, the method further includes: When the time slice, x to-be-executed first execution sequences, and q to-be-executed second execution sequences are present in the first virtual machine in the plurality of virtual machines, the processor preferentially scheduling tasks in the q second execution sequences, where a priority of the first execution sequence is an ordinary-type priority, a priority of the second execution sequence is a real-time-type priority, and x and q are integers greater than or equal to 0. In this implementation, when the first virtual machine includes both a to-be-executed execution sequence whose priority is an ordinary-type priority and a to-be-executed execution sequence whose priority is a real-time-type priority, the processor preferentially schedules a task in the to-be-executed execution sequence whose priority is the real-time-type priority. This ensures real-time performance of the real-time task.

In a possible implementation, that the processor preferentially schedules tasks in the q second execution sequences includes: Real-time-type priorities in the q second execution sequences further include a first real-time priority and a second real-time priority, and a priority of the first real-time priority is higher than that of the second real-time priority; and the processor preferentially schedules a task with the first real-time priority in the q second execution sequences.

In this implementation, when the first virtual machine has a plurality of to-be-executed execution sequences whose priorities are real-time-type priorities, the processor preferentially schedules a task in an execution sequence with a high-level real-time-type priority. In a plurality of cases, when a task in an execution sequence with a low-level real-time-type priority is executed, an execution result of the task in the execution sequence with the high-level real-time-type priority needs to be used. Therefore, preferentially executing the task in the execution sequence with the high-level real-time-type priority helps ensure real-time performance of the real-time task, and improves execution efficiency of the real-time task.

In a possible implementation, the first task belongs to any execution sequence in the x first execution sequences, and the second task belongs to any execution sequence in the q second execution sequences.

In this implementation, in the first virtual machine, when a task with a real-time-type priority arrives while a task with an ordinary-type priority is being executed, the processor stops scheduling of the task with the ordinary-type priority, and starts scheduling of the task with the real-time-type priority. This ensures real-time performance of the real-time task.

In a possible implementation, if a time slice allocation ratio is present in the x first execution sequences, after execution of the tasks in the q second execution sequences is completed, the processor allocates the rest of time slices to the x first execution sequences based on the time slice allocation ratio, and the rest of time slices are a difference between a sum of time slices allocated by the processor to the x first execution sequences and time slices used for executing the tasks in the q second execution sequences.

In this implementation, after execution of the task with the real-time-type priority is completed, the processor allocates the rest of time slices to the execution sequence with the ordinary-type priority based on the original time slice allocation ratio, so that the time slice of the execution sequence with the ordinary-type priority still satisfies the time slice allocation ratio.

In a possible implementation, the first task and the second task belong to different execution sequences in the q second execution sequences, and a priority of the execution sequence to which the second task belongs is higher than a priority of the execution sequence to which the first task belongs.

In this implementation, in the first virtual machine, when the task with the high-level real-time-type priority arrives while the task with the low-level real-time-type priority is being executed, the processor stops scheduling of the task with the low-level real-time-type priority, and starts scheduling of the task with the high-level real-time-type priority. This ensures that the tasks with the real-time-type priorities in the first virtual machine can be executed in descending order of priority levels, ensures real-time performance of the real-time task, and improves execution efficiency of the real-time task.

In a possible implementation, the method further includes: The processor obtains total execution time and current execution time of the first task; the processor computes remaining execution time of the first task based on the total execution time and the current execution time of the first task; and the processor executes the first task when the remaining execution time of the first task is less than a preset threshold.

In this implementation, in the first virtual machine, when the second task arrives while the first task is being executed, before triggering task switching, the processor first computes the remaining execution time of the first task based on the total execution time and the current execution time of the first task. The processor still executes the first task when the remaining execution time of the first task is less than the preset threshold. This ensures that execution of the current first task is completed, to save system resources, and improve service execution efficiency.

In a possible implementation, the method further includes: The processor obtains total execution time and current execution time of the first task; the processor computes remaining execution time of the first task based on the total execution time and the current execution time of the first task; and the processor executes the first task when the remaining execution time of the first task is less than a product of preset switching backup time of the first task and a preset multiple.

In this implementation, in the first virtual machine, when the second task arrives while the first task is being executed, before triggering task switching, the processor first computes the remaining execution time of the first task based on the total execution time and the current execution time of the first task. The processor still executes the first task when the remaining execution time of the first task is less than the product of the preset switching backup time of the first task and the preset multiple. This ensures that execution of the current first task is completed, to save system resources, and improve service execution efficiency.

In a possible implementation, the method further includes: The processor obtains total execution time and current execution time of the first task; the processor computes remaining execution time of the first task based on the total execution time and the current execution time of the first task; and the processor stops execution of the first task when the remaining execution time of the first task is greater than or equal to a preset threshold.

In this implementation, in the first virtual machine, when the second task arrives while the first task is being executed, before triggering task switching, the processor first computes the remaining execution time of the first task based on the total execution time and the current execution time of the first task. The processor stops execution of the first task and starts execution of the second task when the remaining execution time of the first task is greater than or equal to the preset threshold, to ensure real-time performance of the second task with the high priority. This improves service execution efficiency.

In a possible implementation, after the processor stops scheduling of the first task, the method further includes: storing execution information of the first task into a backup memory unit.

In this implementation, after stopping scheduling of the first task, the processor stores the execution information of the first task in the backup memory unit. When scheduling the first task again, the processor retrieves the execution information of the first task from the backup memory unit to continue to execute the first task. This improves execution efficiency of the first task.

In a possible implementation, the execution information of the first task includes one or more of the following information: data in a general-purpose register, data in a dedicated register, data in an internal cache, and data in a buffer in a logical operation unit that executes the first task.

In this implementation, when the processor stops scheduling of the first task, the data in the general-purpose register, the data in the dedicated register, the data in the internal cache, and the data in the buffer in the logical operation unit that executes the first task are stored in the backup memory unit, so that sufficient data is reserved for re-executing the first task. This improves execution efficiency of the first task.

In a possible implementation, a quantity of backup memory units in the processor satisfies the following relational expression: $L=e*g$, where $L$ represents the quantity of backup memory units in the processor, $e$ represents a quantity of logical operation units in the processor, and $g$ represents a quantity of levels of real-time-type priorities.

In this implementation, the quantity of backup memory units in the processor is equal to a product of the quantity of logical operation units in the processor and the quantity of levels of real-time-type priorities. Compared with a case of setting one backup memory unit for each execution sequence in the virtual machine system, this greatly saves memory space.

In a possible implementation, the method further includes: When execution of the second task is completed, the processor executes the first task that is not completed.

In this implementation, when execution of the real-time task or a task with a higher priority is completed, instead of executing a new task, a preempted task is preferentially processed, to ensure that the preempted task is executed first.

In a possible implementation, the method further includes: When no time slice is present and a to-be-executed execution sequence is present in the first virtual machine, the processor schedules a virtual machine that is other than the first virtual machine and in which a time slice is present to execute a task in the execution sequence in the first virtual machine.

In this implementation, when no time slice is present but the to-be-executed task is present in the first virtual machine, the processor schedules another idle virtual machine to execute the task. This improves service processing efficiency of the virtual machine system, and maximizes usage of the computing power of the processor.

In a possible implementation, the method further includes: the time slice allocated by the processor to each virtual machine based on the first configuration information satisfies the following relational expression:

$$Y=1000*1000/t*m*p,$$

where

Y represents the time slice allocated to each virtual machine; t represents a scheduling cycle, and the processor allocates the time slice to each virtual machine in each scheduling cycle; m represents the quantity of logical operation units in the processor; and p represents the computing power ratio of each virtual machine.

According to a second aspect, this application provides a scheduling method, applied to a virtual machine system. The virtual machine system includes a host. The method includes: The host obtains virtual machine configuration information, where the virtual machine configuration information indicates to create a plurality of virtual machines, and the virtual machine configuration information includes a computing power ratio of each virtual machine in the plurality of virtual machines; the host creates the plurality of virtual machines based on the virtual machine configuration information, where the plurality of virtual machines share computing power of a processor; and the host sends first configuration information to the processor, where the first configuration information indicates the computing power ratio of each virtual machine in the plurality of virtual machines.

In this method, the virtual machine system includes the host. The host creates the plurality of virtual machines based on the obtained virtual machine configuration information, and the plurality of created virtual machines jointly complete tasks in the virtual machine system, and send the first configuration information to the processor, to indicate the computing power ratio of each virtual machine in the plurality of virtual machines for the processor. This improves rationality of creating the plurality of virtual machines, saves resources of the virtual machine system, and improves execution efficiency of the virtual machine system.

In a possible implementation, the method further includes: The host obtains a plurality of models; the host creates n execution sequences for a first virtual machine in the plurality of virtual machines based on a first model in the plurality of models, where n is an integer greater than or equal to 0; the host configures a priority for each execution sequence in the n execution sequences; and sends second configuration information to the processor, where the second configuration information indicates priorities of the n execution sequences in the first virtual machine.

In this implementation, the host creates the n execution sequences for the first virtual machine based on the first model in the obtained plurality of models, configures the priority for each execution sequence in the n execution sequences, and sends the second configuration information to the processor, to indicate the priorities of the n execution sequences in the first virtual machine. The n execution sequences can be processed in parallel, and the execution sequences in the n execution sequences can be executed in descending order of priority levels. This improves execution efficiency of the first model, and ensures a real-time requirement of the first model.

In a possible implementation, the priority includes an ordinary-type priority and a real-time-type priority, and the real-time-type priority is higher than the ordinary-type priority.

In a possible implementation, the virtual machine configuration information further includes a cycle length of allocating time slices to the plurality of virtual machines; and the method further includes: The host sends third configuration information to the processor, where the third configuration information indicates the cycle length of allocating the time slices to the plurality of virtual machines.

In this implementation, the host sends the third configuration information to the processor, to indicate a cycle of allocating the time slices to the plurality of virtual machines in the virtual machine system. This satisfies a computing power requirement of each virtual machine, and ensures that each service in the virtual machine can be completed on time as required.

In a possible implementation, the cycle of allocating the time slices to the plurality of virtual machines is greater than or equal to an execution cycle of an execution sequence whose priority is a real-time-type priority.

In this implementation, the cycle of allocating the time slices to plurality of virtual machines in the virtual machine system is greater than or equal to the execution cycle of the execution sequence whose priority is the real-time-type priority, so that when a real-time task in the virtual machine is completed, time slices are reallocated to the plurality of virtual machines. This ensures real-time performance of the real-time task.

According to a third aspect, this application provides a scheduling apparatus, applied to a virtual machine system. The virtual machine system includes a plurality of virtual machines, and the plurality of virtual machines share computing power of a processor. The apparatus includes: an allocation module, configured to allocate a time slice to each virtual machine in the plurality of virtual machines based on first configuration information, where the first configuration information indicates a computing power ratio of each virtual machine in the plurality of virtual machines; and an execution module, configured for the processor to: when a time slice is present in a first virtual machine in the plurality of virtual machines, and a second task arrives while a first task is being executed, stop execution of the first task, and schedule execution of the second task, where a priority of an execution sequence to which the second task belongs is higher than a priority of an execution sequence to which the first task belongs.

In a possible implementation, the first virtual machine in the plurality of virtual machines includes n execution sequences, and n is an integer greater than or equal to 0. The apparatus further includes: The allocation module is further configured to allocate time slices to s execution sequences in the n execution sequences based on the first configuration information and second configuration information, where the second configuration information indicates priorities of the n execution sequences in the first virtual machine, and s is an integer less than or equal to n.

In a possible implementation, a priority of the execution sequence in the first virtual machine includes an ordinary-type priority and a real-time-type priority, and the real-time-type priority is higher than the ordinary-type priority; and priorities of the s execution sequences are ordinary-type priorities.

In a possible implementation, the allocation module is further configured to allocate the time slice to each virtual machine based on the first configuration information and third configuration information, where the third configuration information indicates a cycle length of allocating, by the processor, time slices to the plurality of virtual machines.

In a possible implementation, the cycle length of allocating, by the processor, the time slices to the plurality of virtual machines is greater than or equal to a cycle length of an execution cycle of an execution sequence whose priority is a real-time-type priority.

In a possible implementation, the apparatus further includes a receiving module, configured for the processor to receive the first configuration information.

In a possible implementation, the apparatus further includes: a scheduling module, configured to: when the time slice, x to-be-executed first execution sequences, and q to-be-executed second execution sequences are present in the first virtual machine in the plurality of virtual machines, preferentially schedule tasks in the q second execution sequences, where a priority of the first execution sequence is an ordinary-type priority, a priority of the second execution sequence is a real-time-type priority, and x and q are integers greater than or equal to 0.

In a possible implementation, the scheduling module is specifically configured to: real-time-type priorities in the q second execution sequences further include a first real-time priority and a second real-time priority, and a priority of the first real-time priority is higher than that of the second real-time priority; and the scheduling module preferentially schedules a task with the first real-time priority in the q second execution sequences.

In a possible implementation, the first task belongs to any execution sequence in the x first execution sequences, and the second task belongs to any execution sequence in the q second execution sequences.

In a possible implementation, if a time slice allocation ratio is present in the x first execution sequences, after execution of the tasks in the q second execution sequences is completed, the allocation module is further configured to allocate the rest of time slices to the x first execution sequences based on the time slice allocation ratio, and the rest of time slices are a difference between a sum of time slices allocated by the processor to the x first execution sequences and time slices used for executing the tasks in the q second execution sequences.

In a possible implementation, the first task and the second task belong to different execution sequences in the q second execution sequences, and a priority of the execution sequence to which the second task belongs is higher than a priority of the execution sequence to which the first task belongs.

In a possible implementation, the apparatus further includes: an obtaining module, configured to obtain total execution time and current execution time of the first task; and a computing module, configured to compute remaining execution time of the first task based on the total execution time and the current execution time of the first task, where the execution module is further configured to execute the first task when the remaining execution time of the first task is less than a preset threshold.

In a possible implementation, the obtaining module is further configured to obtain total execution time and current execution time of the first task; the computing module is further configured to compute remaining execution time of the first task based on the total execution time and the current execution time of the first task; and the execution module is further configured to execute the first task when the remaining execution time of the first task is less than a product of preset switching backup time of the first task and a preset multiple.

In a possible implementation, the obtaining module is further configured to obtain total execution time and current execution time of the first task; the computing module is further configured to compute remaining execution time of the first task based on the total execution time and the current execution time of the first task; and the execution module is further configured to stop execution of the first task when the remaining execution time of the first task is greater than or equal to a preset threshold.

In a possible implementation, after the processor stops scheduling of the first task, the apparatus further includes: a storage module, configured to store execution information of the first task into a backup memory unit.

In a possible implementation, the execution information of the first task includes one or more of the following information: data in a general-purpose register, data in a dedicated register, data in an internal cache, and data in a buffer in a logical operation unit that executes the first task.

In a possible implementation, a quantity of backup memory units in the processor satisfies the following relational expression: L=e*g, where L represents the quantity of backup memory units in the processor, e represents a quantity of logical operation units in the processor, and g represents a quantity of levels of real-time-type priorities.

In a possible implementation, the execution module is further configured for the processor to: when execution of the second task is completed, execute the first task that is not completed.

In a possible implementation, the scheduling module is further configured to: when no time slice is present and a to-be-executed execution sequence is present in the first virtual machine, schedule a virtual machine that is other than the first virtual machine and in which a time slice is present to execute a task in the execution sequence in the first virtual machine.

In a possible implementation, the time slice allocated by the processor to each virtual machine based on the first configuration information satisfies the following relational expression:

$$Y=1000*1000/t*m*p,$$

where

Y represents the time slice allocated to each virtual machine; t represents a scheduling cycle, and the processor allocates the time slice to each virtual machine in each scheduling cycle; m represents the quantity of logical operation units in the processor; and p represents the computing power ratio of each virtual machine.

For beneficial effect of the third aspect and the various possible implementations of the third aspect, refer to beneficial effect of the first aspect and the various possible implementations of the first aspect. Details are not described herein again.

According to a fourth aspect, this application provides a scheduling apparatus, applied to a virtual machine system. The virtual machine system includes a host. The apparatus includes: an obtaining module, configured to obtain virtual machine configuration information, where the virtual machine configuration information indicates to create a plurality of virtual machines, and the virtual machine configuration information includes a computing power ratio of each virtual machine in the plurality of virtual machines; a creation module, configured to create the plurality of virtual machines based on the virtual machine configuration information, where the plurality of virtual machines share computing power of a processor; and a sending module, configured to send first configuration information to the processor, where the first configuration information indicates the computing power ratio of each virtual machine in the plurality of virtual machines.

In a possible implementation, the obtaining module is further configured to obtain a plurality of models; the creation module is further configured to create n execution sequences for a first virtual machine in the plurality of virtual machines based on a first model in the plurality of models, where n is an integer greater than or equal to 0; a configuration module is configured to configure a priority for each execution sequence in the n execution sequences; and the sending module is configured to send second configuration information to the processor, where the second configuration information indicates priorities of the n execution sequences in the first virtual machine.

In a possible implementation, the priority includes an ordinary-type priority and a real-time-type priority, and the real-time-type priority is higher than the ordinary-type priority.

In a possible implementation, the virtual machine configuration information further includes a cycle length of allocating time slices to the plurality of virtual machines; and the sending module is further configured to send third configuration information to the processor, where the third configuration information indicates the cycle length of allocating the time slices to the plurality of virtual machines.

In a possible implementation, a cycle of allocating the time slices to the plurality of virtual machines is greater than or equal to an execution cycle of an execution sequence whose priority is a real-time-type priority.

For beneficial effect of the fourth aspect and the various possible implementations of the fourth aspect, refer to beneficial effect of the second aspect and the various possible implementations of the second aspect. Details are not described herein again.

According to a fifth aspect, this application provides a scheduling apparatus. The apparatus may include a processor coupled to a memory. The memory is configured to store program code, and the processor is configured to execute the program code in the memory, to implement the method according to any one of the first aspect or the second aspect or the implementation of the first aspect or the second aspect.

Optionally, the apparatus may further include the memory.

According to a sixth aspect, this application provides a chip. The chip includes at least one processor and a communication interface. The communication interface and the at least one processor are interconnected through a line. The at least one processor is configured to run a computer program or instructions, to perform the method according to any one of the first aspect or the second aspect or the possible implementations of the first aspect or the second aspect.

According to a seventh aspect, this application provides a chip system. The chip system includes a plurality of chips according to the sixth aspect.

According to an eighth aspect, this application provides a computer-readable medium. The computer-readable medium stores program code to be executed by a device, and the program code includes instructions used for performing the method according to any one of the first aspect or the second aspect or the possible implementations of the first aspect or the second aspect.

According to a ninth aspect, this application provides a computer program product including instructions. When the computer program product is run on a computer, the computer is enabled to perform the method according to any one of the first aspect or the second aspect or the possible implementations of the first aspect or the second aspect.

According to a tenth aspect, this application provides a computing device. The computing device includes at least one processor and a communication interface. The communication interface and the at least one processor are interconnected through a line. The communication interface communicates with a target system. The at least one processor is configured to run a computer program or instructions, to perform the method according to any one of the first aspect or the second aspect or the possible implementations of the first aspect or the second aspect.

According to an eleventh aspect, this application provides a computing system. The computing system includes at least one processor and a communication interface. The communication interface and the at least one processor are interconnected through a line. The communication interface communicates with a target system. The at least one processor is configured to run a computer program or instructions, to perform the method according to any one of the first aspect or the second aspect or the possible implementations of the first aspect or the second aspect.

According to a twelfth aspect, this application provides a vehicle. The vehicle includes the chip according to the sixth aspect or the scheduling apparatus according to the fifth aspect.

BRIEF DESCRIPTION OF DRAWINGS

FIG. 1 is a diagram of a system architecture according to an embodiment of this application;
FIG. 2 is a schematic flowchart of a scheduling method according to an embodiment of this application;
FIG. 3 is a flowchart of configuring a scheduling cycle according to an embodiment of this application;
FIG. 4 is a schematic flowchart of a scheduling method according to an embodiment of this application;
FIG. 5 is a schematic flowchart of creating a plurality of virtual machines by a host according to an embodiment of this application;
FIG. 6 is a schematic flowchart of creating an execution sequence according to an embodiment of this application;
FIG. 7 is a diagram of priority preemption according to an embodiment of this application;
FIG. 8 is a diagram of a backup memory unit according to an embodiment of this application;
FIG. 9 is a diagram of a structure of a scheduling apparatus according to an embodiment of this application;
FIG. 10 is a diagram of a structure of a scheduling apparatus according to another embodiment of this application; and
FIG. 11 is a diagram of a structure of a scheduling apparatus according to still another embodiment of this application.

DESCRIPTION OF EMBODIMENTS

The following describes technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

A plurality of artificial intelligence application scenarios include various different services. A central car computer (Central Car Computer, CCC) architecture can virtualize a plurality of partitions with different security levels on an underlying hardware platform with powerful performance for different services to use, and these partitions share hardware with computing and processing capabilities. The partition may also be referred to as a container or a virtual machine (virtual machine, VM). A computer processing capability may be computing power for short. Hardware having computing power may include a processor such as a neural network processing unit (network processing unit, NPU) or a graphics processing unit (graphics processing unit, GPU).

The self-driving field is used as an example. The self-driving field may include services such as planning control, prediction planning, perception convergence, 360-degree surround view of a management plane, a driver monitor system (driver monitor system, DMS), an entertainment system, or a cockpit-related function. These services have different requirements on computing power and real-time performance.

For example, services such as planning control, prediction planning, and perception convergence have high requirements on computing power and real-time performance. The DMS has a high requirement on computing power, and does not have a high requirement on real-time performance. A cockpit-related service has a high requirement on computing power and is related to an actual function, and does not have a high requirement on real-time performance.

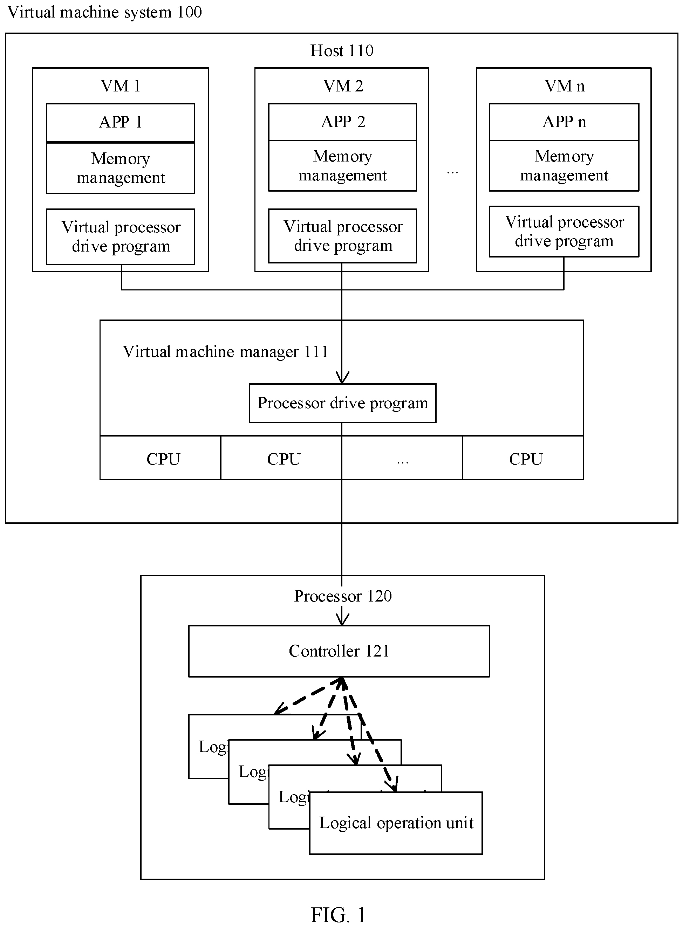

FIG. 1 is a diagram of a system architecture according to an embodiment of this application. As shown in FIG. 1, a virtual machine system 100 includes a host 110 and a processor 120.

The host 110 may include a plurality of virtual machines (a VM 1, a VM 2, ..., and a VM n) and a virtual machine manager (hypervisor) 111. Each virtual machine in the plurality of virtual machines includes an application (application, APP), memory management (runtime), and a virtual processor drive program. The virtual machine manager 111 may include a processor drive program and a central processing unit (central processing unit, CPU). The processor drive program may provide a drive function of the processor 120 for the virtual machine manager 111. For example, the processor drive program can provide, for the virtual machine manager 111, an interface for setting a virtual machine computing power ratio, setting a virtual machine resource scheduling cycle, and the like. The runtime may be deployed in the APP, and may provide a user-mode drive function (for example, an application programming interface (application programming interface, API)) of the processor 120. The APP loads an AI model to the processor 120 by invoking the API provided by the runtime, and drives the processor 120 to execute the AI model to obtain an execution result of the AI model.

The processor 120 may be a dedicated neural network processor (an AI chip), for example, an NPU or a GPU. The processor 120 may include a controller 121 and a plurality of logical operation units. A controller 121 is configured to: receive the AI model sent by the host 110, schedule execution of the AI model to obtain the execution result of the AI model, and report the execution result of the AI model to the host 110. The logical operation unit is configured to: execute a task (an execution unit in an execution sequence) that is in the AI model and that is delivered by the controller 121, and return an execution result of the task to the controller 121.

For example, the AI model may be a computational graph structure. Before delivering the AI model to the processor 120, the APP converts the AI model of the computational graph structure into an execution sequence structure of the processor 120. One AI model corresponds to one or more execution sequences (where the plurality of execution sequences can improve a degree of parallelism), and each execution sequence has a plurality of execution units (namely, AI tasks). One execution unit (AI task) may be further divided into a plurality of blocks (blocks). A quantity of blocks is generally equal to a quantity of cores of the logical operation units in the processor 120, and each logical operation unit executes one block at a time. Therefore, for one AI task, the controller 121 may simultaneously schedule the AI task to the plurality of logical operation units for execution. The APP can obtain a complete computation result only after all AI tasks in all execution sequences of the AI model are executed. The APP may load the AI model to the processor 120, and load the AI model once for a plurality of times for execution, or may respectively deliver the AI tasks of the AI model to the processor 120 for a plurality of times for execution. Regardless of the execution manner, the processor 120 sees that the AI task in the execution sequence needs to be executed. Therefore, the processor 120 performs concurrently scheduling on the AI model, that is, performs concurrent scheduling on the execution sequence.

For example, the controller 121 may deliver only one block of one execution unit to the logical operation unit at a time. After the logical operation unit completes execution, the controller 121 delivers a next block to the logical operation unit.

It may be understood that the system architecture shown in FIG. 1 is merely an example of the virtual machine system provided in this application. In some other embodiments of this application, the virtual machine system 100 may include more or fewer components than those shown in the figure, or combine some components, or split some components, or have different component arrangements. The components shown in the figure may be implemented by hardware, software, or a combination of software and hardware. This is not limited in this application.

The self-driving field is used as an example. Perception, prediction, and planning in a self-driving service are real-time services, and execution time of the corresponding AI model needs to be as short as possible. Execution of the AI model is typical parallel computing. An AI task (operator) may be divided into a plurality of blocks. Therefore, the AI task may be simultaneously executed on a plurality of logical operation units to improve a degree of computing parallelism, improve execution efficiency, and shorten execution time.

In addition, the AI model is executed for perception, prediction, and planning services in a time sequence. A perception result is provided for prediction and planning, and a prediction result is provided for planning. Therefore, if all logical operation units of the processor are used for the real-time service when the AI model is executed for the perception, prediction, and planning services, time for executing the AI model of the real-time service can be shortest. This ensures real-time performance of the service to a greatest extent.

Therefore, a specific quantity of logical operation units are not isolated for each virtual machine, but all virtual machines in the virtual machine system share all logical operation units of the processor, so that running time of the real-time service can be shortest.

All virtual machines have configured computing power specifications. To ensure accuracy of partition computing power usage, a time slice for using the logical operation unit of the processor needs to be allocated to each virtual machine. The controller in the processor controls a service usage time slice of each virtual machine, and the usage of the time slice reflects a computing power configuration specification of each virtual machine.

Because computing power allocation is also performed for a non-real-time service and an AI model also needs to be executed for the non-real-time service, a computing power ratio allocated to the non-real-time service also needs to be ensured. Therefore, the time slice allocated by the controller in the processor to each virtual machine for using the processor cannot be excessively small, that is, a scheduling cycle of the controller in the processor (where a time slice is allocated to each virtual machine once in each scheduling cycle) cannot be excessively short.

Therefore, how to allocate computing power to these partitions or schedule computing power to these partitions to satisfy a requirement on computing power and a requirement on real-time performance of each service becomes an urgent problem to be resolved.

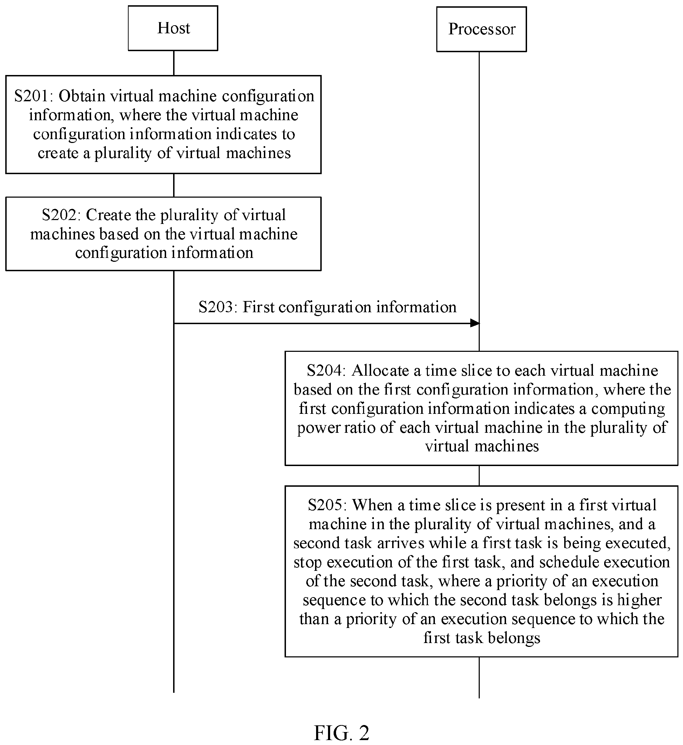

Based on the foregoing descriptions, this application provides a scheduling method. FIG. 2 is a schematic flowchart of an execution sequence of a scheduling method according to an embodiment of this application. As shown in FIG. 2, the method includes at least S201 to S205. The method shown in FIG. 2 may be applied to the virtual machine system 100 shown in FIG. 1.

S201: A host obtains virtual machine configuration information, where the virtual machine configuration information indicates to create a plurality of virtual machines, and the virtual machine configuration information includes a computing power ratio of each virtual machine in the plurality of virtual machines.

In an example, the host in this embodiment may be the host 110 in FIG. 1.

In a possible implementation, the host obtains the virtual machine configuration information through a virtual machine manager. A processor drive program provides an interface for the virtual machine manager to configure the virtual machine configuration information.

In an example, the virtual machine manager in this embodiment may be the virtual machine manager 111 in FIG. 1, and the processor drive program in this embodiment may be the processor drive program in the virtual machine manager 111 in FIG. 1.

For example, the virtual machine configuration information may include information such as a quantity of virtual machines in the virtual machine system, the computing power ratio of each virtual machine in the plurality of virtual machines, and a cycle of performing resource scheduling for the plurality of virtual machines.

S202: The host creates the plurality of virtual machines based on the virtual machine configuration information, where the plurality of virtual machines share computing power of a processor.

In a possible implementation, the host creates the plurality of virtual machines based on the quantity, of virtual machines in the virtual machines, that is indicated by the virtual machine configuration information, where the plurality of virtual machines share the computing power of the processor.

In another possible implementation, the host obtains a plurality of models, and the host creates n execution sequences (execution sequences) for a first virtual machine in the plurality of virtual machines based on a first model in the plurality of models, where n is an integer greater than or equal to 0; and configures a priority for each execution sequence in the n execution sequences. The priority may include an ordinary-type priority and a real-time-type priority, and the real-time-type priority is higher than the ordinary-type priority.

It should be noted that the first model is any model in the plurality of models obtained by the host, and the first virtual machine is any virtual machine in the plurality of virtual machines in the virtual machine system.

S203: The host sends first configuration information to the processor, where the first configuration information indicates the computing power ratio of each virtual machine in the plurality of virtual machines.

In a possible implementation, the host sends the first configuration information to the processor, where the first configuration information indicates the computing power ratio of each virtual machine in the plurality of virtual machines, so that the processor allocates a time slice to each virtual machine based on the computing power ratio that is of each virtual machine in the plurality of virtual machines and that is indicated by the first configuration information.

Optionally, the computing power ratio of each virtual machine in the plurality of virtual machines is an available computing power ratio that is of each virtual machine and that is set by an NPU. For example, there are, in total, five virtual machines in the NPU: a VM 1, a VM 2, a VM 3, a VM 4, and a VM 5. The VM 1, the VM 2, the VM 3, the VM 4, and the VM 5 use 25%, 50%, 10%, and 15% of total computing power of the NPU. Computing power ratios of the virtual machines may be separately set, and a total computing power ratio is less than or equal to 100%.

In another possible implementation, the host sends second configuration information to the processor, where the second configuration information indicates priorities of the n execution sequences in the first virtual machine, so that the processor allocates time slices to the n execution sequences based on the priorities that are of the n execution sequences in the first virtual machine and that are indicated by the second configuration information.

The n execution sequences are to-be-executed execution sequences in the first virtual machine.

In still another possible implementation, the virtual machine configuration information obtained by the host further includes a cycle length of allocating time slices to the plurality of virtual machines, and the host may further send third configuration information to the processor, where the third configuration information indicates the cycle length of allocating the time slices to the plurality of virtual machines in the virtual machine system, so that the processor allocates the time slices to the plurality of virtual machines in the virtual machine system based on a cycle indicated by the third configuration information.

In an example, the cycle length of allocating the time slices to the plurality of virtual machines is greater than or equal to an execution cycle of an execution sequence whose priority is a real-time-type priority.

Optionally, the cycle length of allocating the time slices to the plurality of virtual machines is also referred to as a scheduling cycle.

That is, the scheduling cycle needs to be not less than a cycle of a service with a real-time-type priority. In a computing power time slice allocation cycle, the service with the real-time-type priority may be preferentially scheduled, and then a service with an ordinary-type priority is scheduled. If the cycle is excessively short, the service with the real-time-type priority easily uses up the allocated time slice. If a time slice is also present in the service with the ordinary-type priority, and an AI model can also be executed, the service with the real-time-type priority can have a time slice only in a next cycle, and consequently the service with the real-time-type priority is not executed in time.

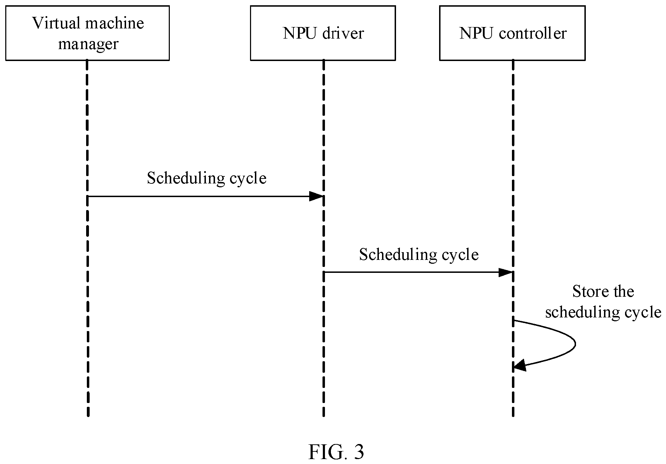

For example, a flowchart of configuring the scheduling cycle is shown in FIG. 3. The virtual machine manager sends the scheduling cycle to an NPU driver, the NPU driver sends the scheduling cycle to an NPU controller, and the NPU controller stores the scheduling cycle for subsequent usage.

S204: The processor allocates the time slice to each virtual machine based on the first configuration information, where the first configuration information indicates the computing power ratio of each virtual machine in the plurality of virtual machines.

In a possible implementation, the processor allocates the time slice to each virtual machine in the virtual machine system based on the computing power ratio that is of the virtual machine and that is indicated by the first configuration information, and a virtual machine with a larger computing power ratio is allocated with more time slices.

In another possible implementation, the first virtual machine in the virtual machine system includes the n execution sequences, and n is an integer greater than or equal to 0. The processor receives the second configuration information, and allocates time slices to s execution sequences in the n execution sequences based on the first configuration information and the second configuration information that re received, where an execution sequence with a higher priority in the s execution sequences is allocated with more time slices, and s is an integer less than or equal to n.

In an example, priorities of the s execution sequences to which the time slices are allocated are all ordinary-type priorities. The processor allocates, based on the first configuration information and the second configuration information, a time slice only to an execution sequence whose priority is an ordinary-type priority, and does not allocate a time slice to an execution sequence whose priority is a real-time-type priority in the n execution sequences. However, when a time slice is present in the first virtual machine, the processor can schedule a task in the execution sequence whose priority is the real-time-type priority.

In a possible implementation, the processor receives the third configuration information, and allocates the time slice to each virtual machine in the virtual machine system based on the cycle length that is of allocating the time slices to the plurality of virtual machines and that is indicated by the third configuration information.

In an example, the processor allocates the time slice to each virtual machine in the virtual machine system based on the cycle length indicated by the third configuration information and based on the first configuration information.

For example, the time slice allocated by the processor to the first virtual machine in the virtual machine system satisfies the following relational expression:

$$Y=1000*1000/t*m*p,$$

where
Y represents the time slice allocated to each virtual machine; t represents the scheduling cycle, and the processor allocates the time slice to each virtual machine in each scheduling cycle; m represents a quantity of logical operation units in the processor; and p represents the computing power ratio of each virtual machine.

In another example, the processor allocates, based on the cycle indicated by the third configuration information and based on the first configuration information and the second configuration information, a time slice to an execution sequence that is in the first virtual machine and whose priority is an ordinary-type priority.

For example, ordinary-type priorities are classified into a plurality of levels, and the processor allocates, based on the cycle indicated by the third configuration information and based on the first configuration information and the second configuration information, time slices to execution sequences with different levels of ordinary-type priorities in the first virtual machine. For example, the execution sequences with the ordinary-type priorities in the first virtual machine may be classified into four levels, a radio of allocating time slices of the four levels in descending order is 10:8:4:2:1, and an execution sequence to which a priority level whose ratio is larger belongs is allocated with more time slices.

After the processor allocates the time slice to the first virtual machine, the processor schedules a task in the first virtual machine.

S205: When the time slice is present in the first virtual machine in the plurality of virtual machines, and a second task arrives while a first task is being executed, stop execution of the first task, and schedule execution of the second task, where a priority of an execution sequence to which the second task belongs is higher than a priority of an execution sequence to which the first task belongs.

In a possible implementation, when the time slice, x to-be-executed first execution sequences, and q to-be-executed second execution sequences are present in the first virtual machine in the plurality of virtual machines, the processor preferentially schedules tasks in the q second execution sequences, where a priority of the first execution sequence is an ordinary-type priority, a priority of the second execution sequence is a real-time-type priority, and x and q are integers greater than or equal to 0.

In an example, real-time-type priorities in the q second execution sequences further include a first real-time priority and a second real-time priority, and a priority of the first real-time priority is higher than that of the second real-time priority; and the processor preferentially schedules a task with the first real-time priority in the q second execution sequences.

In a possible implementation, in the first virtual machine, when the second task arrives while the first task is being executed, the first task belongs to any execution sequence in the x first execution sequences, and the second task belongs to any execution sequence in the q second execution sequences, the processor stops execution of the first task, and schedules execution of the second task.

In a possible implementation, if a time slice allocation ratio, for example, 10:8:4:2:1, is present in the x first execution sequences, after execution of the tasks in the q second execution sequences is completed, the processor allocates the rest of time slices to the x first execution sequences based on the time slice allocation ratio, and the rest of time slices are a difference between a sum of time slices allocated by the processor to the x first execution sequences and time slices used for executing the tasks in the q second execution sequences.

That is, after execution of the task with the real-time-type priority is completed, the processor allocates the rest of time slices to the execution sequence with the ordinary-type priority based on the original time slice allocation ratio, so that the time slice of the execution sequence with the ordinary-type priority still satisfies the time slice allocation ratio.

In another possible implementation, in the first virtual machine, when the second task arrives while the first task is being executed, the first task and the second task belong to different execution sequences in the q second execution sequences, and a priority of the execution sequence to which the second task belongs is higher than a priority of the execution sequence to which the first task belongs, the processor stops execution of the first task, and schedules execution of the second task.

In an example, for the foregoing two possible implementations, before the processor stops scheduling of the first task, the processor obtains total execution time and current execution time of the first task, and computes remaining execution time of the first task. The processor executes the first task when the remaining execution time of the first task is less than a preset threshold.

Optionally, the preset threshold includes switching backup time.

That is, in the first virtual machine, when the second task arrives while the first task is being executed, before triggering task switching, the processor first computes the remaining execution time of the first task based on the total execution time and the current execution time of the first task. The processor still executes the first task when the remaining execution time of the first task is less than the preset threshold. This ensures that execution of the current first task is completed, to save system resources, and improve service execution efficiency.

In another example, before the processor stops scheduling of the first task, the processor obtains total execution time and current execution time of the first task, and computes remaining execution time of the first task. The processor executes the first task when the remaining execution time of the first task is less than a product of preset switching backup time of the first task and a preset multiple.

The switching backup time may be configured by the NPU driver for the NPU controller. Switching backup time of the logical operation unit varies with a quantity of cores and a running frequency, and is configured by the NPU driver for the NPU controller. The preset multiple is configured in advance.

That is, in the first virtual machine, when the second task arrives while the first task is being executed, before triggering task switching, the processor first computes the remaining execution time of the first task based on the total execution time and the current execution time of the first task. The processor still executes the first task when the remaining execution time of the first task is less than the product of the preset switching backup time of the first task and the preset multiple. This ensures that execution of the current first task is completed, to save system resources, and improve service execution efficiency.

In still another example, before the processor stops scheduling of the first task, the processor obtains total execution time and current execution time of the first task, and computes remaining execution time of the first task. The processor stops execution of the first task when the remaining execution time of the first task is greater than or equal to a preset threshold.

That is, in the first virtual machine, when the second task arrives while the first task is being executed, before triggering task switching, the processor first computes the remaining execution time of the first task based on the total execution time and the current execution time of the first task. The processor stops execution of the first task and starts execution of the second task when the remaining execution time of the first task is greater than or equal to the preset threshold, to ensure real-time performance of the second task with a high priority. This improves service execution efficiency.

Optionally, the preset threshold includes switching backup time.

In an example, after stopping scheduling of the first task, the processor stores execution information of the first task in a backup memory unit. The execution information of the first task may include data in a general-purpose register, data in a dedicated register, data in an internal cache, data in a buffer, and the like in the logical operation unit that executes the first task.

In an example, a quantity of backup memory units in the processor satisfies the following relational expression:

$$L=e*g,$$

where
L represents the quantity of backup memory units in the processor, e represents a quantity of logical operation units in the processor, and g represents a quantity of levels of real-time-type priorities.

In still another possible implementation, when no time slice is present and a to-be-executed execution sequence is present in the first virtual machine, the processor schedules a virtual machine that is other than the first virtual machine and in which a time slice is present to execute the task in the execution sequence in the first virtual machine.

That is, when no time slice is present and the to-be-executed task is present in the first virtual machine, the processor may schedule another virtual machine in which an available time slice is present or the rest of time slices are present to execute the task. This improves service processing efficiency of the virtual machine system, and maximizes usage of the computing power of the processor.

Optionally, when execution of the second task is completed, the processor executes the uncompleted first task. That is, when execution of a real-time task or a task with a higher priority is completed, instead of executing a new task, a preempted task is preferentially processed, to ensure that the preempted task is executed first.

For example, when a specific task with an ordinary-type priority is preempted, and scheduling of all tasks in a real-time execution sequence is completed, execution of the preempted task is preferentially resumed. Because if a new task is executed instead of continuing to execute a previously interrupted task, when preemption is performed again, field information has already been backed up in corresponding memory space, and no memory space is available for backing up field information of this task.

In the technical solution provided in this application, the processor allocates the time slice to each virtual machine in the virtual machine system based on the computing power ratio of each virtual machine in the plurality of virtual machines, and a virtual machine with a larger computing power ratio is allocated with more time slices, so that the plurality of virtual machines share the computing power of the processor, a computing power requirement of each virtual machine is satisfied, and rationality of time slice allocation to each virtual machine is ensured. In addition, when a task with a high priority arrives, the task with the high priority is preferentially executed. This can ensure real-time performance of execution of the task with the high priority.

The following describes the scheduling method provided in this application by using an example in which the processor in the virtual machine system is an NPU.

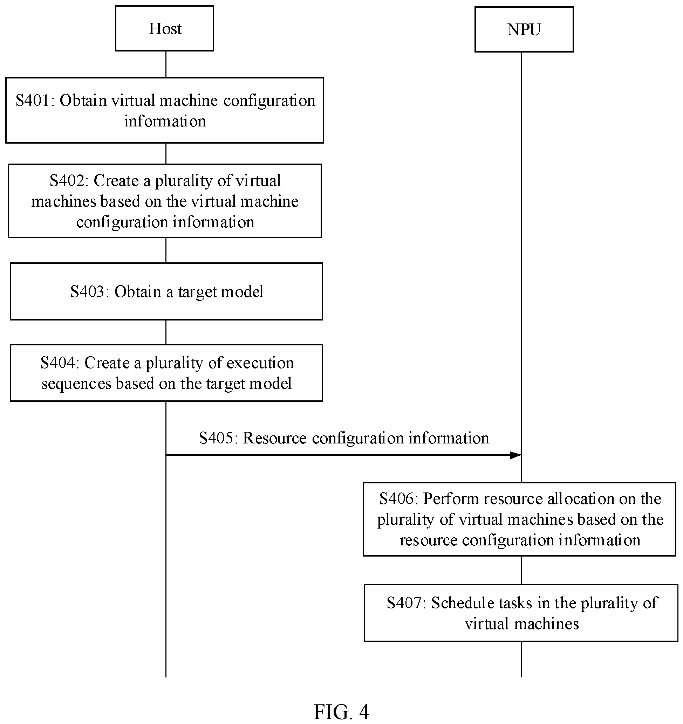

FIG. 4 is a schematic flowchart of a scheduling method according to an embodiment of this application. As shown in FIG. 4, the method includes at least S401 to S407. The method shown in FIG. 4 may be applied to the virtual machine system 100 shown in FIG. 1.

S401: A host obtains virtual machine configuration information.

It should be noted that for S401, refer to S201. Details are not described herein again.

S402: The host creates a plurality of virtual machines based on the virtual machine configuration information.

In a possible implementation, the virtual machine configuration information obtained by the host includes information such as a quantity of created virtual machines and a computing power ratio of each virtual machine in the plurality of created virtual machines.

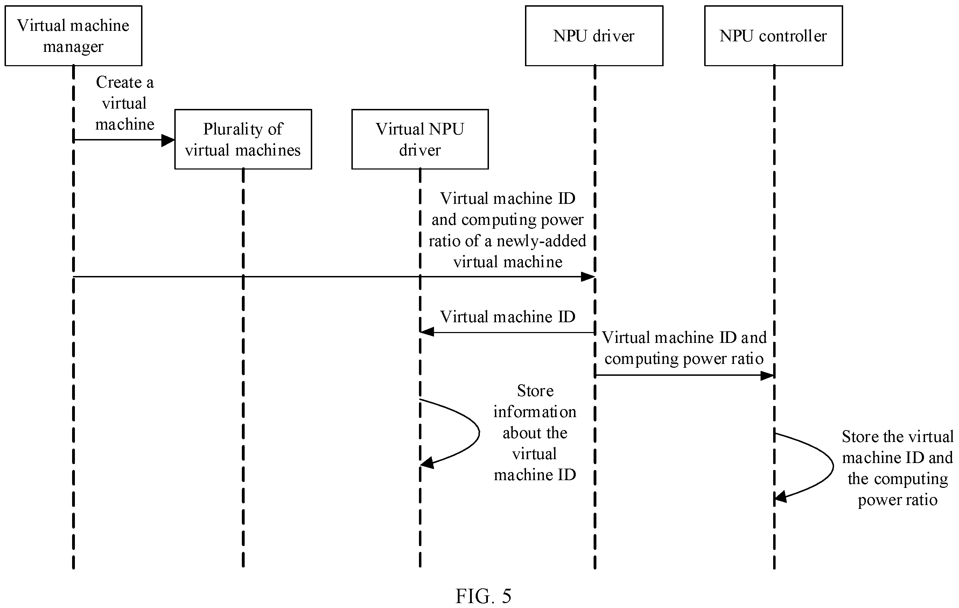

In an example, a flowchart of creating the plurality of virtual machines by the host is shown in FIG. 5. A virtual machine manager (hypervisor) in the host creates the plurality of virtual machines based on the virtual machine configuration information. The hypervisor invokes an interface of an NPU driver (NPU driver) to notify the NPU driver of a virtual machine identity (identity document, ID) and a computing power ratio of each newly-added virtual machine. The NPU driver notifies a virtual NPU driver (vNPU driver) in the virtual machine of the virtual machine ID. The vNPU driver stores information about the virtual machine ID. The NPU driver configures the virtual machine ID and the computing power ratio for an NPU controller. The NPU controller stores the information such as the virtual machine ID and the computing power ratio.

S403: The host obtains a target model.

In a possible implementation, an APP in any virtual machine in the virtual machine system obtains the target model, and loads the target model.

In an example, the target model may be an AI model.

S404: The host creates a plurality of execution sequences based on the target model.

In a possible implementation, when the APP in any virtual machine in the virtual machine system loads the target model, the plurality of execution sequences (execution sequences) need to be created.

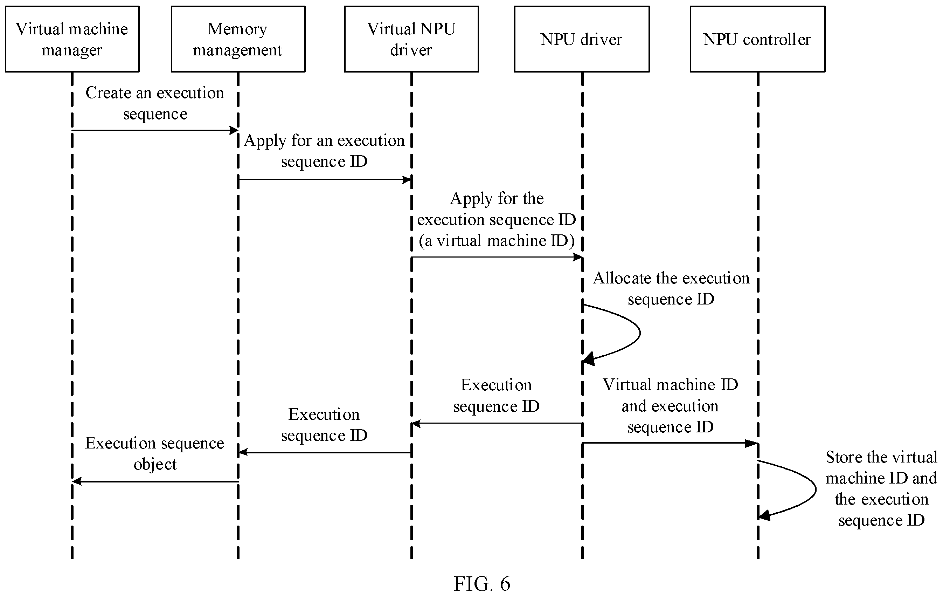

In an example, FIG. 6 is a schematic flowchart of creating an execution sequence according to an embodiment of this application. As shown in FIG. 6, a virtual machine manager invokes an interface of memory management (runtime) to create an execution sequence, and configures a priority for the created execution sequence. The memory management invokes an interface of a virtual NPU driver in a virtual machine to apply for an execution sequence ID. The virtual NPU driver applies for the execution sequence ID from an NPU driver in the host. The virtual NPU driver also sends a virtual machine ID to the NPU driver. The NPU driver allocates one execution sequence ID to a virtual machine corresponding to the virtual machine ID, and returns the execution sequence ID to the virtual NPU driver. The NPU driver configures both the virtual machine ID and the execution sequence ID for an NPU controller. The NPU controller stores information about the virtual machine ID and the execution sequence ID. Therefore, the NPU controller has information about an execution sequence ID of each virtual machine.

In addition, an APP does not perceive whether the APP is being run on the virtual machine or the host. The memory management provides a same interface for the APP, and definitions of the priority of the execution sequence are the same. The priority of the execution sequence may be divided into a real-time-type priority and an ordinary-type priority, and the real-time-type priorities and the ordinary-type priorities may be further subclassified into a plurality of levels.

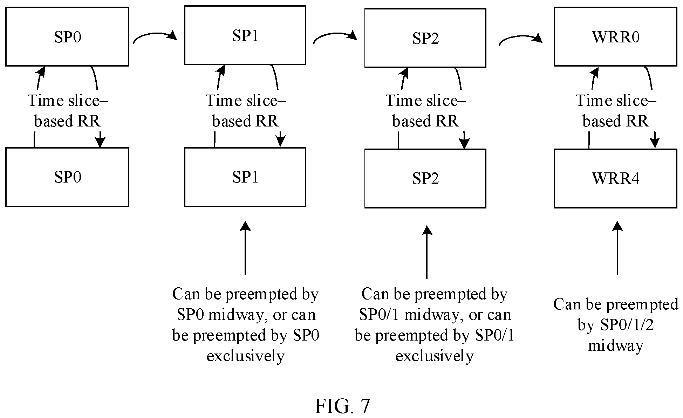

For example, the real-time priorities may be classified into three levels: SP0, SP1, and SP2, where a priority of SP0 is higher than a priority of SP1, and the priority of SP1 is higher than a priority of SP2; and the ordinary-type priorities may be classified into four levels: WRR0, WRR1, WRR3, and WRR4, where a priority of WRR0 is higher than a priority of WRR1, the priority of WRR1 is higher than a priority of WRR2, the priority of WRR2 is higher than a priority of WRR3, and the priority of WRR3 is higher than a priority of WRR4. An execution sequence of a real-time-type priority may preempt an execution sequence of an ordinary-type priority, and an execution sequence of a high-level real-time-type priority may preempt an execution sequence of a low-level real-time-type priority. A diagram of priority preemption is shown in FIG. 7. An execution sequence with the priority of SP0 may preempt execution sequences with the priorities of SP1 and SP2, and the execution sequence with the priority of SP1 may preempt the execution sequence with the priority of SP2. A level of an ordinary-type priority may be reflected in a size of a time slice.

S405: The host sends resource configuration information to an NPU.

The plurality of virtual machines in the virtual machine system share resources of the NPU, and the resource configuration information sent by the host to the NPU indicates the NPU to perform resource allocation on the plurality of virtual machines.

In an example, the resource configuration information sent by the host to the NPU may include information such as the computing power ratio of each virtual machine in the plurality of virtual machines, a priority of an execution sequence in each virtual machine, and a cycle length of allocating a resource to each virtual machine.

S406: The NPU performs resource allocation on the plurality of virtual machines based on the resource configuration information.

In a possible implementation, in each resource allocation cycle indicated by the resource configuration information, the NPU controller allocates a time slice to each virtual machine.

In an example, a time slice allocated by the NPU controller to a first virtual machine may satisfy a formula $Y=1000*1000/t*m*p$, where Y represents the time slice allocated by the NPU to the first virtual machine; t represents a scheduling cycle, and the processor allocates the time slice to the first virtual machine in each scheduling cycle; m represents a quantity of logical operation units in the NPU; and p represents a computing power ratio of the first virtual machine. A unit of the time slice is microsecond ($\mu s$), and the resource allocation cycle indicated by the resource configuration information may be 30 hertz (hertz, Hz).

In a possible implementation, the NPU controller allocates a time slice to the execution sequence with the ordinary-type priority based on a priority of an execution sequence in the first virtual machine.

In an example, a ratio of time slices allocated to execution sequences with ordinary-type priorities WRR0 to WRR4 in the first virtual machine may be 10:8:4:2:1. Because the execution sequence with the real-time-type priority may preempt the time slice of the execution sequence with the ordinary-type priority, no time slice is allocated to the execution sequence with the real-time-type priority.

In an example, in any virtual machine in the plurality of virtual machines, when the execution sequence with the real-time-type priority is run, the NPU controller deducts, based on the ratio of time slices with ordinary-type priorities, the time slice of the execution sequence with the ordinary-type priority, and a total quantity of time slices after the time slice is deducted is a quantity of time slices used by the execution sequence with the real-time-type priority, so that the time slice of the execution sequence with the ordinary-type priority still satisfies a preset ratio.

In a possible implementation, after one resource allocation cycle ends, the NPU controller reallocates a time slice to each virtual machine.

In an example, if any virtual machine does not use up a time slice in a previous resource allocation cycle, the rest of time slices are not brought into a next resource allocation cycle. If a time slice used by any virtual machine exceeds an allocated specification, this is caused by task (task) execution time of a last execution sequence. Because the task execution time is far less than the time slice of the virtual machine, an excess part is not deducted in the next resource allocation cycle. Inside the virtual machine, a time slice that is not used up in the execution sequence with the ordinary-type priority is not brought into the next resource allocation cycle, but an excess time slice that is used up in the previous resource allocation cycle is deducted at a next time that the time slice is allocated.

S407: The NPU schedules tasks in the plurality of virtual machines.

In a possible implementation, the NPU controller in the NPU schedules a task in the execution sequence in the virtual machine system.

In an example, the NPU controller first schedules the execution sequence, with the real-time-type priority, in which the time slice is present and the execution sequence, with the ordinary-type priority, in which the time slice is present in the virtual machine; and if no task is scheduled in these execution sequences, schedules another execution sequence, for example, an execution sequence in which no time slice is present.

In another example, when the execution sequences with the real-time-type priority and the ordinary-type priority are scheduled together, execution sequences of all types are sequentially scheduled based on a high real-time priority, a low real-time priority, and an ordinary-type priority. That is, after scheduling of all execution sequences with high-level real-time-type priorities is completed, an execution sequence with a low-level real-time-type priority is scheduled, and finally an execution sequence with an ordinary type is scheduled.

In still another example, when a plurality of execution sequences with a same priority are scheduled together, and running time of any execution sequence exceeds preset time, or a time slice of the execution sequence is used up, the NPU controller schedules another execution sequence. In this case, after execution of a task (task) that is being run currently is completed, the NPU controller switches a task in another execution sequence, instead of switching the task/block that is being executed midway.

In a possible implementation, when execution of each block is completed, the NPU controller may obtain a time slice used for running the block, and deduct time slices of the corresponding execution sequence and virtual machine.

In an example, when a task, with an ordinary-type priority in the virtual machine, in which a time slice is present is being executed, and a task in an execution sequence with a real-time-type priority arrives, scheduling of the task with the ordinary-type priority is stopped, and scheduling of the task with the real-time-type priority is started. After scheduling of the task in the execution sequence with the real-time-type priority in the virtual machine is completed, the time slice used by the task with the real-time-type priority needs to be deducted from the time slice of the execution sequence with the ordinary-priority in the virtual machine.

For example, when the task in the execution sequence with the real-time-type priority arrives, if the logical operation unit is executing a block of the task in the execution sequence with the ordinary-type priority; or when a task in the low-level execution sequence with the real-time-type priority is executed, a task in the high-level execution sequence with the real-time-type priority arrives, and the NPU controller needs to interrupt the block that is being executed, and execute the block of the task with the (high) real-time priority. This process may be referred to as preemption.

After execution of the task/block of the execution sequence is interrupted, the NPU controller needs to back up field information of the block that is being run currently. The field information may include information in a general-purpose register, information in a dedicated register, information in an internal cache (buffer), information in a buffer (cache), and the like in the logical unit that executes the block. Space of the buffer and the cache in the logical operation unit is large. Therefore, equally large memory space is required to back up these pieces of information. Memory space in which all field information (all general-purpose registers, dedicated registers, buffers, and caches) in one logical operation unit is backed up is referred to as a backup memory unit.

In an example, a quantity of backup memory units in the NPU may satisfy a relational expression $L = e * g$, where L represents the quantity of backup memory units in the NPU, e represents a quantity of logical operation units in the NPU, and g represents a quantity of levels of real-time-type priorities.

For example, there are three levels of the real-time-type priorities: SP0, SP1, and SP2. In this case, a value of g is 3.

For example, a quantity of backup memory units in each logical operation unit is equal to a quantity of levels of real-time-type priorities. When there are three levels of the real-time-type priorities, there are three backup memory units in each logical operation unit in the NPU. Each memory backup block is used for storing data in the general-purpose register, data in the dedicated register, data in the internal cache, and data in the buffer in the logical operation unit, that is, the field information of the block that is run by the logical operation unit.

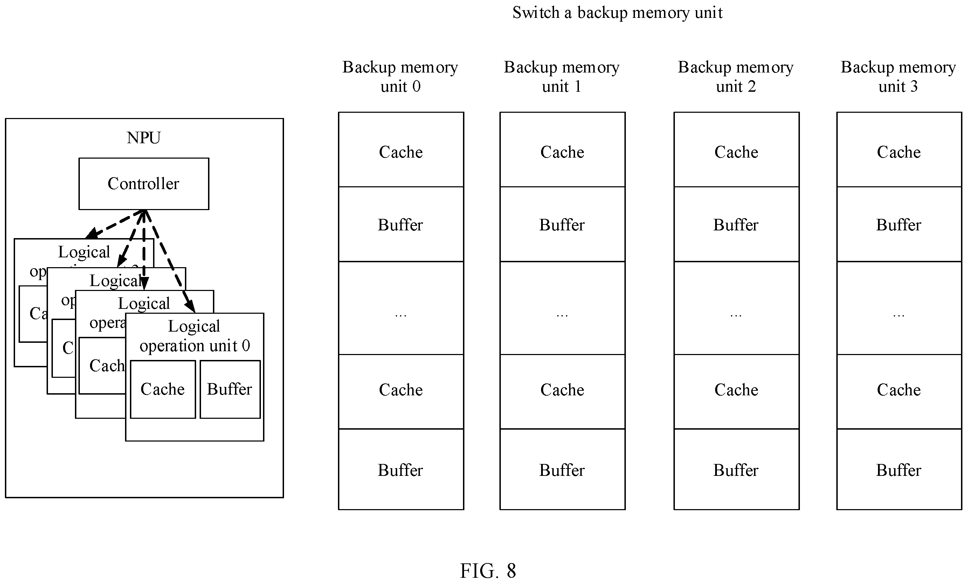

Optionally, FIG. 8 is a diagram of a backup memory unit according to an embodiment of this application. As shown in FIG. 8, the NPU includes a plurality of logical operation units (a logical operation unit 0 to a logical operation unit 3), and the plurality of logical operation units are controlled by the controller. Each logical operation unit includes a plurality of internal caches (buffers), a plurality of buffers (caches), and the like, the backup memory unit 0 to the backup memory unit 3 may back up all field information (all general-purpose registers, dedicated registers, buffers, and caches) in one logical operation unit.

For example, when preemption occurs, field information of a preempted block in the logical operation unit is backed up to corresponding space. If an execution sequence with an ordinary-type priority is preempted by an execution sequence with a real-time-type priority SP0/1/2, the field information is backed up in the backup memory unit 2. If an execution sequence whose priority is a real-time-type priority SP2 is preempted by an execution sequence whose priority is a real-time-type priority SP0/1, the field information is backed up in the backup memory unit 1. If an execution sequence whose priority is a real-time-type priority SP1 is preempted by an execution sequence whose priority is a real-time-type priority SP0, the field information is backed up in the backup memory unit 0.

For example, the NPU driver allocates total space of the backup memory unit based on the quantity of logical operation units in the NPU. When the NPU is started, the NPU driver configures the backup memory unit for the NPU controller.

In an example, when the logical operation unit is executing a task/block with an ordinary-type priority or a task/block with a low-level real-time-type priority, if the NPU controller detects that a task arrives in an execution sequence with a real-time-type priority or an execution sequence with a high-level real-time-type priority, the NPU controller configures a control register in the logical operation unit, so that the logical operation unit stops execution of the current block, and the logical operation unit stops execution of each internal execution sequence waterline, returns a signal to the NPU controller, and notifies the NPU controller that execution of the current block has been stopped. The NPU controller configures the control register in the logical operation unit to enable a backup function of the logical operation unit. The logical operation unit starts memory tagging extension (memory tagging extension, MTE) to back up data in the register, the cache, and the buffer to the specified backup memory unit. The logical operation unit returns the signal to the NPU controller to notify the NPU controller that backup is completed. The NPU controller records the information about the stopped execution sequence, the task, or the block. The NPU controller configures the block of the task with the (high) real-time-type priority to the logical operation unit. The logical operation unit executes the block of the currently configured task with the real-time-type priority.

In an example, when both a preempted task and a to-be-scheduled task in an execution sequence queue have scheduling opportunities, a block of the preempted task is preferentially resumed.

For example, after a specific task with an ordinary-type priority is preempted, when scheduling of all tasks in the execution sequence with the real-time-type priority is completed, the preempted task is preferentially resumed. Because if a new task is executed instead of continuing to execute a previously interrupted task, when preemption occurs again, the field information has been backed up in corresponding memory space, and no memory space is available to back up field information of this new task.

For example, that the execution sequence is preempted and resumed may include as follows: The NPU controller configures the register in the logical operation unit, so that the logical operation unit enables a field resume function. The logical operation unit starts the MTE and resumes the data from the specified backup memory unit to the register, the cache, and the buffer. The logical operation unit returns the signal to the NPU controller, and notifies the NPU controller that resume is completed. The NPU controller configures the logical operation unit to enable the logical operation unit to start to execute the preempted block, that is, continue to execute the previously interrupted block in a current resume environment. In addition, the NPU controller clears the recorded information about the stopped execution sequence, the task, and the block in the backup memory unit.

It should be noted that a preempted block in a logical operation unit A may resume running on a logical operation unit B.

In an example, because preemption requires the backup and recovery environment, overheads are high. If remaining execution time of the current block is less than backup time, completion of execution of the block is more conducive to task scheduling than preemption. This improves task execution efficiency. In this case, the NPU controller needs to learn of total execution time and execution time of a currently executed task or block, to learn of how long the current block needs to be executed to end, and learn whether preemption can be avoided. Therefore, it is necessary to add statistics on the execution time of the task or block.

For example, a performance statistical counter t_cnt is added to each logical unit in the NPU, to count a quantity of execution cycles (cycles) of the block, and space is added for each task to store the quantity of execution cycles of the task/block. The quantity of execution cycles is obtained based on actual execution time of the block. Therefore, the quantity of execution cycles is 0 when the model is loaded.

For example, when the logical operation unit starts to execute the block, the performance statistical counter t_cnt is set to 0. In an execution process, the logical operation unit adds 1 to t_cnt in each cycle. In the process in which the logical operation unit executes the block, the NPU controller may read a quantity of cycles in which the block has been executed. When execution of the block ends, the NPU controller may obtain a total quantity of cycles in which the block is executed.

For example, the NPU controller controls and schedules execution of the task/block. When execution of the block ends, the NPU controller reads a value of t_cnt in the logical operation unit, namely, the execution time of the block, and sums up the value to a location of the quantity of cycles of the corresponding task in the execution queue. Therefore, the total quantity of execution cycles of the task may be obtained. The total quantity of execution cycles is divided by a quantity of blocks, to obtain average execution time of the block.

If a frequency and a quantity of cores of the logical operation unit in the NPU are adjusted, the quantity of execution cycles of the task also changes. Therefore, the NPU controller needs to re-collect the quantity of execution cycles of the task. The NPU controller re-counts and updates a total quantity of cycles of a new task only when the AI model is run for the first time or the frequency and the quantity of cores of the logical operation unit in the NPU are adjusted.

In an example, the NPU controller configures a preset threshold. If remaining time of the currently executed block is less than the preset threshold, preemption is not performed. After execution of the current block is completed, a block of a newly arrived task is executed.

For example, the configured preset threshold may be a multiple of the switching backup time. If the remaining execution time of the currently executed block is less than the multiple of the preset switching backup time, preemption is not performed. The switching backup time may be configured by the NPU driver for the NPU controller. The switching backup time of the logical operation unit varies with the quantity of cores and the running frequency, and is configured by the NPU driver for the NPU controller.

It should be noted that, when the model runs for the first time, the quantity of cores and the running frequency of the logical operation unit are adjusted, the information about the task in a model queue does not include execution statistical time of the task. Therefore, the controller directly preempts the task without considering preemption avoidance. After the model is executed once, the execution statistical time of the task is available, and then the NPU controller can perform a preemption avoidance operation.

In a possible implementation, when no task is scheduled in the execution sequence, with the real-time-type priority in the virtual machine, in which the time slice is present or in the execution sequence in which the time slice is present, the NPU controller performs idle processing.

In an example, the NPU controller schedules the virtual machine in which the time slice is present to execute all execution sequences in the virtual machine in which no time slice is present and an execution sequence in the virtual machine in which the time slice is present but the execution sequence in which no time slice is present. In addition, in the scheduling process, priorities of the execution sequences are not distinguished, and another execution sequence is scheduled after each execution sequence is executed for the preset time.

In an example, in an idle processing state, time for executing the task in the execution sequence does not occupy a time slice allocated by the virtual machine.

In an example, when the virtual machine in which time slice is present executes a task in an execution sequence in another virtual machine, if a task in the execution sequence with the real-time-type priority in the virtual machine arrives, scheduling of the current task is stopped, and the arrived task in the execution sequence with the real-time-type priority is started and scheduled; or if the task in the execution sequence with the ordinary-type priority arrives, after execution of the current task is completed, the virtual machine is scheduled to execute the arrived task in the execution sequence with the ordinary-type priority.

In a possible implementation, if no time slice is present in the virtual machine, but the execution sequence with the real-time-type priority in the virtual machine has a task to be scheduled, it indicates that resource allocation of the virtual machine is abnormal.

In an example, a case in which a virtual machine resource allocation exception occurs may be that execution sequences in the virtual machine are all execution sequences with real-time-type priorities, or a quantity of execution sequences with real-time-type priorities in the virtual machine is far greater than a quantity of execution sequences with ordinary-type priorities, and consequently computing power allocated to the virtual machine is excessively small. In this case, a solution is to increase the computing power ratio of the virtual machine.

In another example, before the NPU controller schedules the virtual machine to execute the task in the execution sequence with the real-time-type priority, a time slice in the virtual machine is used up in the execution sequence with the ordinary-type priority, and consequently no time slice is present in the virtual machine to execute the execution sequence with the real-time-type priority. In this case, a solution may be to move the execution sequence with the ordinary-type priority to another virtual machine for execution or increase the computing power of the virtual machine.

According to the technical solution provided in this application, the virtual machines in the virtual machine system share the NPU computing power based on the configured NPU computing power ratio. The real-time-type task is preferentially executed, and the real-time-type task may use all NPU logical operation units, to ensure real-time performance of the real-time task. When remaining execution time of the block of the currently executed task is less than the preset threshold, the NPU controller does not perform preemption switching. This improves NPU usage efficiency and improves real-time performance of the real-time task.

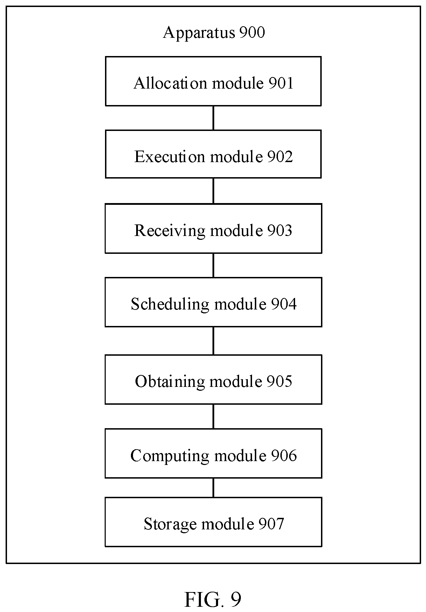

FIG. 9 is a diagram of a structure of a scheduling apparatus according to an embodiment of this application. As shown in FIG. 9, the apparatus 900 may include an allocation module 901, an execution module 902, a receiving module 903, a scheduling module 904, an obtaining module 905, a computing module 906, and a storage module 907. The apparatus 900 may be configured to implement the operations implemented by the processor in FIG. 2 and FIG. 4.

All or some of the modules in embodiments of this application may be implemented by using software and/or hardware.

In a possible implementation, the apparatus 900 may be configured to implement the method shown in FIG. 2. For example, the allocation module 901 is configured to implement S204, and the execution module 902 is configured to implement S205.

In another implementation, the apparatus 900 may further include a scheduling module. The apparatus 900 in this implementation may be configured to implement the method shown in FIG. 4. For example, the allocation module 901 is configured to implement S406, and the scheduling module is configured to implement S407.

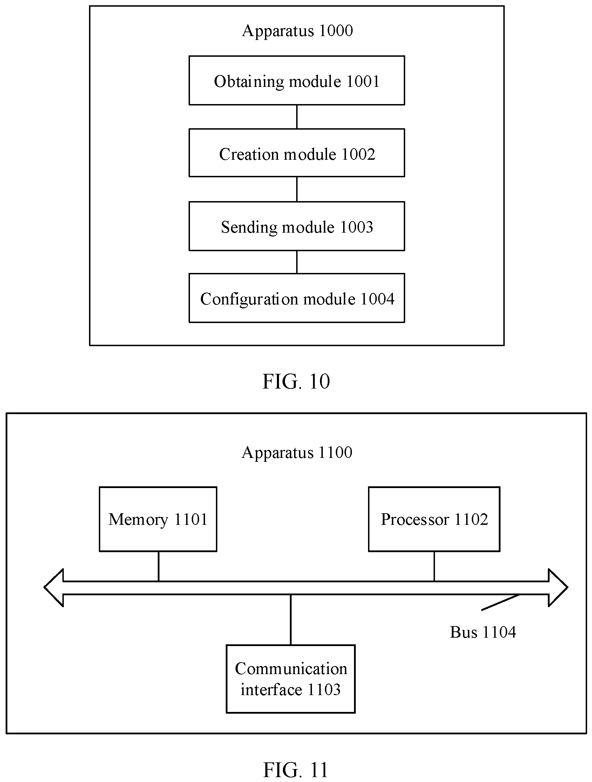

FIG. 10 is a diagram of a structure of a scheduling apparatus according to another embodiment of this application. As shown in FIG. 10, the apparatus 1000 may include an obtaining module 1001, a creation module 1002, a sending module 1003, and a configuration module 1004. The apparatus 1000 may be configured to implement the operations implemented by the host in FIG. 2 and FIG. 4.

All or some of the modules in embodiments of this application may be implemented by using software and/or hardware.

In a possible implementation, the apparatus 1000 may be configured to implement the method shown in FIG. 2. For example, the obtaining module 1001 is configured to implement S201, the creation module 1002 is configured to implement S202, and the sending module 1003 is configured to implement S203.

In another possible implementation, the apparatus 1000 may be configured to implement the method shown in FIG. 4. For example, the obtaining module 1001 is configured to implement S401 and S403, the creation module 1002 is configured to implement S402 and S404, and the sending module 1003 is configured to implement S405.

FIG. 11 is a diagram of a structure of a scheduling apparatus according to an embodiment of this application. The apparatus 1100 shown in FIG. 11 may be configured to perform the method according to any one of the foregoing embodiments.

As shown in FIG. 11, the apparatus 1100 in this embodiment includes a memory 1101, a processor 1102, a communication interface 1103, and a bus 1104. The memory 1101, the processor 1102, and the communication interface 1103 are communicatively connected to each other through the bus 1104.

The memory 1101 may be a read-only memory (read-only memory, ROM), a static storage device, a dynamic storage device, or a random access memory (random access memory, RAM). The memory 1101 may store a program. When the program stored in the memory 1101 is executed by the processor 1102, the processor 1102 may be configured to perform the steps of the methods shown in FIG. 2 and FIG. 4.

The processor 1102 may be a general-purpose central processing unit (central processing unit, CPU), a microprocessor, an application-specific integrated circuit (application-specific integrated circuit, ASIC), or one or more integrated circuits, configured to execute a related program, to implement the scheduling method in the method embodiments of this application.

The processor 1102 may alternatively be an integrated circuit chip and has a signal processing capability. In an implementation process, the steps of the methods in embodiments of this application may be completed through a hardware integrated logic circuit in the processor 1102 or by using instructions in a form of software.

The processor 1102 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1101. The processor 1102 reads information in the memory 1101, and completes, in combination with hardware of the processor 1102, functions that need to be performed in the methods in embodiments of this application. For example, the processor 1102 may perform the steps/functions in the embodiments shown in FIG. 2 and FIG. 4.

The communication interface 1103 may use, but is not limited to, a transceiver apparatus such as a transceiver, to implement communication between the apparatus 1100 and another device or a communication network.

The bus 1104 may include a path for transferring information between components (for example, the memory 1101, the processor 1102, and the communication interface 1103) of the apparatus 1100.

It should be understood that, the apparatus 1100 shown in this embodiment of this application may be an electronic device, or may be a chip configured in an electronic device.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be all or partially implemented in a form of a computer program product. The computer program product includes one or more computer instructions or computer programs. When the program instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A scheduling method, applied to a virtual machine system, wherein the virtual machine system comprises a plurality of virtual machines, the plurality of virtual machines share computing power of a processor, and the method comprises:

allocating, by the processor, a time slice to each virtual machine in the plurality of virtual machines based on first configuration information, wherein the first configuration information indicates a computing power ratio of each virtual machine in the plurality of virtual machines; and

when a time slice is present in a first virtual machine in the plurality of virtual machines, and a second task arrives while a first task is being executed, stopping, by the processor, execution of the first task, and scheduling execution of the second task, wherein a priority of an execution sequence to which the second task belongs is higher than a priority of an execution sequence to which the first task belongs.

2. The method according to claim 1, wherein the first virtual machine in the plurality of virtual machines comprises n execution sequences, and n is an integer greater than or equal to 0; and
the method further comprises:
allocating, by the processor, time slices to s execution sequences in the n execution sequences based on the first configuration information and second configuration information, wherein the second configuration information indicates priorities of the n execution sequences in the first virtual machine, and s is an integer less than or equal to n.

3. The method according to claim 2, wherein a priority of the execution sequence in the first virtual machine comprises an ordinary-type priority and a real-time-type priority, and the real-time-type priority is higher than the ordinary-type priority; and
priorities of the s execution sequences are ordinary-type priorities.

4. The method according to any one of claims 1 to 3, wherein the method further comprises:
allocating, by the processor, the time slice to each virtual machine based on the first configuration information and third configuration information, wherein the third configuration information indicates a cycle length of allocating, by the processor, time slices to the plurality of virtual machines.

5. The method according to claim 4, wherein the cycle length of allocating, by the processor, the time slices to the plurality of virtual machines is greater than or equal to a cycle length of an execution cycle of an execution sequence whose priority is a real-time-type priority.

6. The method according to any one of claims 1 to 5, wherein the method further comprises:
receiving, by the processor, the first configuration information.

7. The method according to any one of claims 1 to 6, wherein the method further comprises:
when the time slice, x to-be-executed first execution sequences, and q to-be-executed second execution sequences are present in the first virtual machine in the plurality of virtual machines, preferentially scheduling, by the processor, tasks in the q second execution sequences, wherein a priority of the first execution sequence is an ordinary-type priority, a priority of the second execution sequence is a real-time-type priority, and x and q are integers greater than or equal to 0.

8. The method according to claim 7, wherein the preferentially scheduling, by the processor, tasks in the q second execution sequences comprises:

real-time-type priorities in the q second execution sequences further comprise a first real-time priority and a second real-time priority, and a priority of the first real-time priority is higher than that of the second real-time priority; and preferentially scheduling, by the processor, a task with the first real-time priority in the q second execution sequences.

9. The method according to claim 7 or 8, wherein the first task belongs to any execution sequence in the x first execution sequences, and the second task belongs to any execution sequence in the q second execution sequences.

10. The method according to claim 9, wherein if a time slice allocation ratio is present in the x first execution sequences, after execution of the tasks in the q second execution sequences is completed, the processor allocates the rest of time slices to the x first execution sequences based on the time slice allocation ratio, and the rest of time slices are a difference between a sum of time slices allocated by the processor to the x first execution sequences and time slices used for executing the tasks in the q second execution sequences.

11. The method according to claim 7 or 8, wherein the first task and the second task belong to different execution sequences in the q second execution sequences, and a priority of the execution sequence to which the second task belongs is higher than a priority of the execution sequence to which the first task belongs.

12. The method according to any one of claims 9 to 11, wherein the method further comprises:

obtaining, by the processor, total execution time and current execution time of the first task; computing, by the processor, remaining execution time of the first task based on the total execution time and the current execution time of the first task; and
executing, by the processor, the first task when the remaining execution time of the first task is less than a preset threshold.

13. The method according to any one of claims 9 to 11, wherein the method further comprises:

obtaining, by the processor, total execution time and current execution time of the first task; computing, by the processor, remaining execution time of the first task based on the total execution time and the current execution time of the first task; and
executing, by the processor, the first task when the remaining execution time of the first task is less than a product of preset switching backup time of the first task and a preset multiple.

14. The method according to any one of claims 9 to 11, wherein the method further comprises:

obtaining, by the processor, total execution time and current execution time of the first task; computing, by the processor, remaining execution time of the first task based on the total execution time and the current execution time of the first task; and
stopping, by the processor, execution of the first task when the remaining execution time of the first task is greater than or equal to a preset threshold.

15. The method according to any one of claims 9 to 13, wherein the method further comprises:
storing execution information of the first task into a backup memory unit.

16. The method according to claim 15, wherein the execution information of the first task comprises one or more of the following information: data in a general-purpose register, data in a dedicated register, data in an internal cache, and data in a buffer in a logical operation unit that executes the first task.

17. The method according to claim 15 or 16, wherein a quantity of backup memory units in the processor satisfies the following relational expression:

$$L=e*g,$$

wherein
L represents the quantity of backup memory units in the processor, e represents a quantity of logical operation units in the processor, and g represents a quantity of levels of real-time-type priorities.

18. The method according to any one of claims 1 to 17, wherein the method further comprises:
when execution of the second task is completed, executing, by the processor, the first task that is not completed.

19. The method according to any one of claims 7 to 18, wherein the method further comprises:
when no time slice is present and a to-be-executed execution sequence is present in the first virtual machine, scheduling, by the processor, a virtual machine that is other than the first virtual machine and in which a time slice is present to execute a task in the execution sequence in the first virtual machine.

20. The method according to any one of claims 1 to 19, wherein the time slice allocated by the processor to each virtual machine based on the first configuration information satisfies the following relational expression:

$$Y=1000*1000/t*m*p,$$

wherein
Y represents the time slice allocated to each virtual machine; t represents a scheduling cycle, and the processor allocates the time slice to each virtual machine in each scheduling cycle; m represents the quantity of logical operation units in the processor; and p represents the computing power ratio of each virtual machine.

21. A scheduling method, applied to a virtual machine system, wherein the virtual machine system comprises a host, and the method comprises:

obtaining, by the host, virtual machine configuration information, wherein the virtual machine configuration information indicates to create a plurality of virtual machines, and the virtual machine configuration information comprises a computing power ratio of each virtual machine in the plurality of virtual machines;
creating, by the host, the plurality of virtual machines based on the virtual machine configuration information, wherein the plurality of virtual machines share computing power of a processor; and
sending, by the host, first configuration information to the processor, wherein the first configuration information indicates the computing power ratio of each virtual machine in the plurality of virtual machines.

22. The method according to claim 21, wherein the method further comprises:

obtaining, by the host, a plurality of models;
creating, by the host, n execution sequences for a first virtual machine in the plurality of virtual machines based on a first model in the plurality of models, wherein n is an integer greater than or equal to 0;
configuring, by the host, a priority for each execution sequence in the n execution sequences; and
sending second configuration information to the processor, wherein the second configuration information indicates priorities of the n execution sequences in the first virtual machine.

23. The method according to claim 22, wherein the priority comprises an ordinary-type priority and a real-time-type priority, and the real-time-type priority is higher than the ordinary-type priority.

24. The method according to any one of claims 21 to 23, wherein the virtual machine configuration information further comprises a cycle length of allocating time slices to the plurality of virtual machines; and the method further comprises:
sending, by the host, third configuration information to the processor, wherein the third configuration information indicates the cycle length of allocating the time slices to the plurality of virtual machines.

25. The method according to claim 24, wherein a cycle of allocating the time slices to the plurality of virtual machines is greater than or equal to an execution cycle of an execution sequence whose priority is a real-time-type priority.

26. A scheduling apparatus, comprising a memory and a processor, wherein

the memory is configured to store program instructions; and
the processor is configured to invoke the program instructions in the memory, to perform the method according to any one of claims 1 to 20 or the method according to any one of claims 21 to 25.

27. A chip, comprising at least one processor and a communication interface, wherein the communication interface and the at least one processor are interconnected through a line, and the at least one processor is configured to run a computer program or instructions, to perform the method according to any one of claims 1 to 20 or the method according to any one of claims 21 to 25.

28. A computer-readable medium, wherein the computer-readable medium stores program code to be executed by a computer, and the program code comprises instructions used for performing the method according to any one of claims 1 to 20 or the method according to any one of claims 21 to 25.

29. A computer program product, wherein the computer program product comprises instructions; and when the instructions are executed, a computer is enabled to perform the method according to any one of claims 1 to 20 or the method according to any one of claims 21 to 25.

30. A vehicle, wherein the vehicle comprises the scheduling apparatus according to claim 26 or the chip according to claim 27.

Virtual machine system 100

Host 110

VM 1

APP 1

Memory management

Virtual processor drive program

VM 2

APP 2

Memory management

Virtual processor drive program

...

VM n

APP n

Memory management

Virtual processor drive program

Virtual machine manager 111

Processor drive program

| CPU | CPU | ... | CPU |

Processor 120

Controller 121

Logi

Logi

Logi

Logical operation unit

FIG. 1

```
┌──────────────┐                              ┌──────────────┐
│     Host     │                              │  Processor   │
└──────┬───────┘                              └──────┬───────┘
       │                                             │
┌──────┴─────────────────────────┐                   │
│ S201: Obtain virtual machine   │                   │
│ configuration information,     │                   │
│ where the virtual machine      │                   │
│ configuration information      │                   │
│ indicates to create a          │                   │
│ plurality of virtual machines  │                   │
└──────┬─────────────────────────┘                   │
┌──────┴─────────────────────────┐                   │
│ S202: Create the plurality of  │                   │
│ virtual machines based on the  │                   │
│ virtual machine configuration  │                   │
│ information                    │                   │
└──────┬─────────────────────────┘                   │
       │  S203: First configuration information       │
       │────────────────────────────────────────────▶│
       │                   ┌─────────────────────────┴──────────┐
       │                   │ S204: Allocate a time slice to each │
       │                   │ virtual machine based on the first  │
       │                   │ configuration information, where    │
       │                   │ the first configuration information │
       │                   │ indicates a computing power ratio   │
       │                   │ of each virtual machine in the      │
       │                   │ plurality of virtual machines       │
       │                   └─────────────────────────┬──────────┘
       │                   ┌─────────────────────────┴──────────┐
       │                   │ S205: When a time slice is present  │
       │                   │ in a first virtual machine in the   │
       │                   │ plurality of virtual machines, and  │
       │                   │ a second task arrives while a first │
       │                   │ task is being executed, stop        │
       │                   │ execution of the first task, and    │
       │                   │ schedule execution of the second    │
       │                   │ task, where a priority of an        │
       │                   │ execution sequence to which the     │
       │                   │ second task belongs is higher than  │
       │                   │ a priority of an execution sequence │
       │                   │ to which the first task belongs     │
       │                   └─────────────────────────┬──────────┘
       │                                             │
```

FIG. 2

FIG. 3

```
┌──────────┐                              ┌──────────┐
│   Host   │                              │   NPU    │
└────┬─────┘                              └────┬─────┘
     │                                         │
┌────┴──────────────────────────────┐         │
│ S401: Obtain virtual machine       │         │
│ configuration information          │         │
└────┬──────────────────────────────┘         │
     │                                         │
┌────┴──────────────────────────────┐         │
│ S402: Create a plurality of virtual│         │
│ machines based on the virtual      │         │
│ machine configuration information  │         │
└────┬──────────────────────────────┘         │
     │                                         │
┌────┴──────────────────────────────┐         │
│ S403: Obtain a target model        │         │
└────┬──────────────────────────────┘         │
     │                                         │
┌────┴──────────────────────────────┐         │
│ S404: Create a plurality of        │         │
│ execution sequences based on the   │         │
│ target model                       │         │
└────┬──────────────────────────────┘         │
     │  S405: Resource configuration information │
     ├────────────────────────────────────────►│
     │                                         │
     │         ┌───────────────────────────────┴────┐
     │         │ S406: Perform resource allocation   │
     │         │ on the plurality of virtual         │
     │         │ machines based on the resource      │
     │         │ configuration information           │
     │         └───────────────────────────────┬────┘
     │                                         │
     │         ┌───────────────────────────────┴────┐
     │         │ S407: Schedule tasks in the         │
     │         │ plurality of virtual machines       │
     │         └───────────────────────────────┬────┘
     │                                         │
```

FIG. 4

EP 4 521 247 A1

```
┌─────────────────┐                              ┌─────────────┐   ┌─────────────────┐
│ Virtual machine │                              │  NPU driver │   │ NPU controller  │
│    manager      │                              │             │   │                 │
└────────┬────────┘                              └──────┬──────┘   └────────┬────────┘
         ╎                                              ╎                   ╎
         ╎ Create a                                     ╎                   ╎
         ╎ virtual                                      ╎                   ╎
         ╎ machine    ┌─────────────┐  ┌─────────────┐  ╎                   ╎
         │───────────▶│ Plurality of│  │ Virtual NPU │  ╎                   ╎
         ╎            │virtual machines│ │   driver   │  ╎                   ╎
         ╎            └──────┬──────┘  └──────┬──────┘  ╎                   ╎
         ╎                   ╎                ╎          ╎                   ╎
         ╎                   ╎                ╎  Virtual machine ID          ╎
         ╎                   ╎                ╎  and computing power         ╎
         ╎                   ╎                ╎  ratio of a newly-added      ╎
         ╎                   ╎                ╎    virtual machine           ╎
         │───────────────────────────────────────────────▶                 ╎
         ╎                   ╎                ╎          ╎                   ╎
         ╎                   ╎          Virtual machine ID                   ╎
         ╎                   ╎                ◀──────────╎                   ╎
         ╎                   ╎                ╎  Virtual machine ID and      ╎
         ╎                   ╎                ╎  computing power ratio       ╎
         ╎                   ╎                ╎          │──────────────────▶
         ╎                   ╎             Store         ╎                   ╎
         ╎                   ╎          information      ╎           Store the virtual
         ╎                   ╎          about the        ╎           machine ID and
         ╎                   ╎             virtual        ╎           the computing
         ╎                   ╎          machine ID        ╎            power ratio
```

FIG. 5

FIG. 6

FIG. 7

Switch a backup memory unit

| Backup memory unit 0 | Backup memory unit 1 | Backup memory unit 2 | Backup memory unit 3 |
|---|---|---|---|
| Cache | Cache | Cache | Cache |
| Buffer | Buffer | Buffer | Buffer |
| ... | ... | ... | ... |
| Cache | Cache | Cache | Cache |
| Buffer | Buffer | Buffer | Buffer |

NPU

Controller

Logical operation unit 0

Cache | Buffer

FIG. 8

EP 4 521 247 A1

FIG. 9

Apparatus 1000

Obtaining module 1001

Creation module 1002

Sending module 1003

Configuration module 1004

FIG. 10

Apparatus 1100

Memory 1101

Processor 1102

Communication interface 1103

Bus 1104

FIG. 11

## INTERNATIONAL SEARCH REPORT

| International application No. |
| --- |
| **PCT/CN2022/096455** |

**A.    CLASSIFICATION OF SUBJECT MATTER**

G06F 9/50(2006.01)i

According to International Patent Classification (IPC) or to both national classification and IPC

**B.    FIELDS SEARCHED**

Minimum documentation searched (classification system followed by classification symbols)

G06F; H04L

Documentation searched other than minimum documentation to the extent that such documents are included in the fields searched

Electronic data base consulted during the international search (name of data base and, where practicable, search terms used)

CNTXT; WPABS; WPABSC; VEN; ENTXT; ENTXTC; CJFD; 百度, BAIDU: 虚拟机, 分享, 共享, 处理器, 算力, 计算, 资源, 配额, 分配, 调度, 配置, 调节, 时间片, 任务, 优先级, 实时, 中断, VM, shared, CPU, compute, resource, allocated, schedule, dispatch, configuration, slice, task, priority, real time, interrupt.

**C.    DOCUMENTS CONSIDERED TO BE RELEVANT**

| Category* | Citation of document, with indication, where appropriate, of the relevant passages | Relevant to claim No. |
| --- | --- | --- |
| Y | US 2020326980 A1 (OPENSYNERGY GMBH) 15 October 2020 (2020-10-15) <br> description, paragraphs 115 and 123 | 1-30 |
| Y | US 7356817 B1 (INTEL CORP.) 08 April 2008 (2008-04-08) <br> description, column 2, line 52 to column 3, line 10 | 1-30 |
| A | CN 114237818 A (KEDONG (GUANGZHOU) SOFTWARE TECHNOLOGY CO., LTD.) 25 March 2022 (2022-03-25) <br> entire document | 1-30 |
| A | CN 114327843 A (HUAWEI TECHNOLOGIES CO., LTD.) 12 April 2022 (2022-04-12) <br> entire document | 1-30 |
| A | CN 109857542 A (GUIZHOU HUAXINTONG SEMICONDUCTOR TECHNOLOGY CO., LTD.) 07 June 2019 (2019-06-07) <br> entire document | 1-30 |
| A | US 2012216193 A1 (LEE JU-PYUNG et al.) 23 August 2012 (2012-08-23) <br> entire document | 1-30 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 January 2023** | **28 January 2023** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT Information on patent family members | | | International application No. PCT/CN2022/096455 | | | |
|---|---|---|---|---|---|---|

| Patent document cited in search report | | | Publication date (day/month/year) | Patent family member(s) | | | Publication date (day/month/year) |
|---|---|---|---|---|---|---|---|
| US | 2020326980 | A1 | 15 October 2020 | WO | 2019072624 | A1 | 18 April 2019 |
| | | | | EP | 3470980 | A1 | 17 April 2019 |
| | | | | US | 11416293 | B2 | 16 August 2022 |
| US | 7356817 | B1 | 08 April 2008 | AT | 431587 | T | 15 May 2009 |
| | | | | AU | 4362801 | A | 15 October 2001 |
| | | | | DE | 60138695 | D1 | 25 June 2009 |
| | | | | WO | 0175602 | A2 | 11 October 2001 |
| | | | | HK | 1049532 | A1 | 16 May 2003 |
| | | | | AU | 2001243628 | A8 | 15 October 2001 |
| | | | | EP | 1269313 | A2 | 02 January 2003 |
| | | | | WO | 0175602 | A3 | 25 July 2002 |
| | | | | EP | 1269313 | B1 | 13 May 2009 |
| CN | 114237818 | A | 25 March 2022 | None | | | |
| CN | 114327843 | A | 12 April 2022 | WO | 2022068697 | A1 | 07 April 2022 |
| CN | 109857542 | A | 07 June 2019 | CN | 109857542 | B | 29 January 2021 |
| US | 2012216193 | A1 | 23 August 2012 | KR | 20120095758 | A | 29 August 2012 |
| | | | | US | 9792137 | B2 | 17 October 2017 |
| | | | | KR | 101773166 | B1 | 30 August 2017 |

Form PCT/ISA/210 (patent family annex) (January 2015)